# EUROPÄISCHE PATENTSCHRIFT

(11) **EP 2 462 365 B1**
(45) Veröffentlichungstag und Bekanntmachung des Hinweises auf die Patenterteilung: **12.03.2014**
(21) Anmeldenummer: 10739327.4
(22) Anmeldetag: 22.07.2010
(51) Int. Cl.: F16H 61/04, F16H 3/66, B60W 10/06, B60W 10/115, B60W 30/188, F16H 61/686, F16H 63/50

(54) **VERFAHREN ZUM BETREIBEN EINER GETRIEBEVORRICHTUNG EINES FAHRZEUGANTRIEBSSTRANGES**
METHOD FOR OPERATING A TRANSMISSION DEVICE OF A VEHICLE DRIVETRAIN
PROCÉDÉ POUR FAIRE FONCTIONNER UN DISPOSITIF DE TRANSMISSION D'UNE BRANCHE D'ENTRAÎNEMENT DE VÉHICULE

(30) Priorität: 06.08.2009 DE 102009028305
(43) Veröffentlichungstag der Anmeldung: 13.06.2012
(73) Patentinhaber: ZF Friedrichshafen AG, 88038 Friedrichshafen (DE)
(72) Erfinder: CÜPPERS, Ruben, 88239 Wangen (DE); FUCHS, Werner, 88677 Markdorf (DE); SCHMIDT, Thilo, 88074 Meckenbeuren (DE)
(86) Internationale Anmeldenummer: PCT/EP2010/060654
(87) Internationale Veröffentlichungsnummer: WO 2011/015466

(56) Entgegenhaltungen:
- WO-A1-2006/074707
- WO-A1-2008/138723
- DE-A1- 10 244 023
- DE-A1-102004 014 081
- JP-A- 6 323 377

## Beschreibung

Die Erfindung betrifft ein Verfahren zum Betreiben einer Getriebevorrichtung eines Fahrzeugantriebsstranges gemäß der im Oberbegriff des Patentanspruches 1 näher definierten Art.

An sich bekannte und als Automatgetriebe ausgeführte Getriebevorrichtungen, wie ein beispielsweise in der DE 10 2005 002 337 A1 beschriebenes Mehrstufengetriebe, sind zum Darstellen verschiedener Übersetzungen mit Schaltelementen ausgeführt, über welche jeweils ein anliegendes Drehmoment reibschlüssig übertragbar ist. Bei Vorliegen einer Anforderung zum Darstellen einer definierten Übersetzung werden jeweils wenigstens eines oder mehrere der reibschlüssigen Schaltelemente aus dem Kraftfluss einer Getriebevorrichtung abgeschaltet, während wenigstens ein weiteres oder weitere reibschlüssige Schaltelemente zur Darstellung der angeforderten Übersetzung in den Kraftfluss der Getriebevorrichtung zugeschaltet werden. Während des Zuschaltvorganges eines reibschlüssigen Schaltelementes sind zur Gewährleistung eines gewünschten Schaltkomforts keine besonderen Synchronisiermaßnahmen erforderlich, da ein angestrebter Schaltkomfort mittels reibschlüssiger Schaltelemente bei definierten Anpressdrücken innerhalb eines breiten Differenzdrehzahlbandes erreichbar ist.

Da derartige Getriebevorrichtungen in an sich bekannter Art und Weise auf Grund von im Bereich von geöffneten reibschlüssigen Schaltelementen auftretenden Schleppverlusten mit nur unzureichenden Wirkungsgraden betreibbar sind, werden bestimmte reibschlüssige Schaltelemente durch formschlüssige Schaltelemente ersetzt. Bei solchen Automatgetrieben, die sowohl mit reibschlüssigen Schaltelementen als auch mit mindestens einem formschlüssigen Schaltelement und mit einer entsprechenden Radsatzkonstruktion ausgeführt sind, ist zur Umsetzung einer definierten Schaltanforderung mindestens ein formschlüssiges Schaltelement in einen Kraftfluss einer Getriebevorrichtung zuzuschalten. Derartig aufgebaute Automatikgetriebe sind sowohl in der WO2008/138723A1, die alle Merkmale des Oberbegriffs des Patentanspruchs 1 zeigt, als auch in der DE10244023A1 offenbart.

Nachteilhafterweise sind formschlüssige Schaltelemente mit oder ohne zusätzliche konstruktive Synchronisiereinrichtungen im Vergleich zu reibschlüssigen Schaltelementen nur bei sehr geringen Differenzdrehzahlen, d. h. nahe ihrer Synchrondrehzahl, komfortabel schaltbar, wodurch ein Betrieb eines mit wenigstens einem formschlüssigen Schaltelement ausgeführten und als Automatgetriebe ausgebildeten Getriebevorrichtung zumindest während der Durchführung bestimmter Schaltungen, an welchen ein formschlüssiges Schaltelement beteiligt ist, in unerwünschtem Umfang beeinträchtigt ist. Eine angeforderte Schaltung ist unter Umständen erst nach Ablauf einer unerwünscht langen Schaltzeit abschließbar, da vor dem Schließen des an der angeforderten Schaltung beteiligten formschlüssigen Schaltelementes sich die Differenzdrehzahl im Bereich des formschlüssigen Schaltelementes auf einen Betrag einstellen muss, zu dem das formschlüssige Schaltelement in seinen geschlossenen Betriebszustand überführbar ist.

Zusätzliche konstruktive Maßnahmen zum Synchronisieren von formschlüssigen Schaltelementen von Getriebevorrichtungen, um eine angeforderte Schaltung innerhalb einer akzeptablen Schaltzeit bei gleichzeitig hohem Schaltkomfort durchführen zu können, erhöhen jedoch unerwünschterweise sowohl die Fertigungskosten als auch den Bauraumbedarf der Getriebevorrichtungen.

Der vorliegenden Erfindung liegt daher die Aufgabe zu Grunde, ein Verfahren zum Betreiben einer Getriebevorrichtung zur Verfügung zu stellen, mittels welchem Schaltungen in Getriebevorrichtungen, an welchen wenigstens ein formschlüssiges Schaltelement beteiligt ist, mit hohem Schaltkomfort kostengünstig und ohne zusätzlichen Bauraumbedarf einer Getriebevorrichtung innerhalb vordefinierter Schaltzeiten durchführbar sind.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung eines Fahrzeugantriebsstranges mit mehreren reibschlüssigen Schaltelementen und wenigstens einem formschlüssigen Schaltelement zum Darstellen verschiedener Übersetzungen wird im Neutralbetriebszustand der Getriebevorrichtung, zu dem der Kraftfluss im Bereich der Getriebevorrichtung unterbrochen ist, und bei Vorliegen eines Betriebszustandsverlaufes des Fahrzeugantriebsstranges, zu dem bei einer Anforderung zum Herstellen des Kraftflusses in der Getriebevorrichtung das wenigstens ein formschlüssiges Schaltelement aus einem geöffneten in einen geschlossenen Betriebszustand zu überführen ist, durch Anheben der Übertragungsfähigkeit von wenigstens zwei reibschlüssigen Schaltelementen, die zum Herstellen des Kraftflusses zuzuschalten sind, auf ein Niveau, auf dem die Schaltelemente sich in einem schlupffreien Betriebszustand befinden, eine Differenzdrehzahl im Bereich des formschlüssigen Schaltelementes ermittelt. Ein Antriebsmoment einer Antriebsmaschine des Fahrzeugantriebsstranges wird auf ein die Differenzdrehzahl im Bereich des formschlüssigen Schaltelementes innerhalb eines vordefinierten Differenzdrehzahlbereiches führendes Niveau eingestellt, innerhalb dem das formschlüssige Schaltelement wenigstens annähernd einen Synchronzustand aufweist und schließbar ist.

Damit wird das wenigstens eine formschlüssige Schaltelement ohne zusätzliche konstruktive Synchronisierungseinrichtungen durch einen entsprechenden Betrieb von in einer Getriebevorrichtung bereits vorhandenen Einrichtungen, d. h. vorliegend mittels wenigstens zwei reibschlüssigen Schaltelementen, und zusätzlich über einen Motoreingriff effektiv, kostengünstig und mit geringem Bauraumbedarf der Getriebevorrichtung während bzw. vor einer angeforderten Herstellung des Kraftflusses im Bereich der Getriebevorrichtung vor dem Schließvorgang definiert synchronisiert, so dass Betriebszustandswechsel bzw. Schaltungen in einer Getriebevorrichtung mit hohem Schaltkomfort mit gleichzeitig akzeptablen Schaltzeiten durchführbar sind.

Bei einer vorteilhaften Variante des Verfahrens nach der Erfindung werden die Übertragungsfähigkeiten der beiden reibschlüssigen Schaltelemente vor dem Zuschalten des formschlüssigen Schaltelementes im Wesentlichen auf Null abgesenkt, womit für einen Fahrer eines Fahrzeuges durch den Schließvorgang des formschlüssigen Schaltelementes unerwartete Reaktionen im Fahrzeugantriebsstrang, wie beispielsweise durch das plötzliche Herstellen des Kraftflusses im Bereich der Getriebevorrichtung verursachte Schaltrucke oder dergleichen, auf einfache Art und Weise vermieden.

Eines der beiden reibschlüssigen Schaltelemente wird bei einer weiteren Variante des Verfahrens nach der Erfindung zum Zuschaltzeitpunkt des formschlüssigen Schaltelementes und nach der Zuschaltung des formschlüssigen Schaltelementes mit einer Betätigungskraft beaufschlagt, wobei eine Erhöhung der Betätigungskraft eine unmittelbare Erhöhung der Übertragungsfähigkeit des reibschlüssigen Schaltelementes bewirkt. Damit befindet sich das reibschlüssige Schaltelement in einem Betriebszustand, von dem ausgehend der Kraftfluss im Bereich der Getriebevorrichtung innerhalb kürzester Zeit mit hohem Schaltkomfort herstellbar ist.

Das Antriebsmoment der Antriebsmaschine ist ab dem Zuschaltzeitpunkt des formschlüssigen Schaltelementes auf ein betriebszustandsabhängig angefordertes Niveau führbar, womit der Fahrzeugantriebsstrang bzw. die Antriebsmaschine in einen beispielsweise vor dem für die Synchronisierung des formschlüssigen Schaltelementes vorgesehenen Motoreingriff angeforderten Betriebszustand überführt wird und der Fahrzeugantriebsstrang in vorgesehenem Umfang betrieben wird.

Das betriebszustandsabhängige Niveau des Antriebsmomentes der Antriebsmaschine ist bei einer weiteren Variante des erfindungsgemäßen Verfahrens zu einer Leerlaufdrehzahl der Drehzahl der Antriebsmaschine äquivalent.

Vorzugsweise sind zur Ermittlung der Differenzdrehzahl im Bereich des formschlüssigen Schaltelementes zwei Drehzahlsensoren vorgesehen, wobei einer der Drehzahlsensoren getriebeeingangsseitig und der andere Drehzahlsensor getriebeausgangsseitig angeordnet ist.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Darstellung eines Fahrzeugantriebsstranges mit einer Getriebevorrichtung;
- Fig. 2: ein Räderschema der Getriebevorrichtung gemäß Fig. 1;

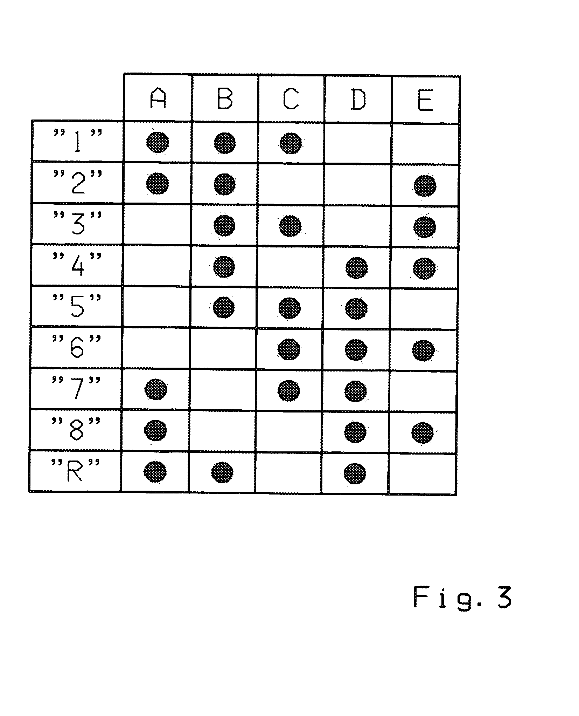

- Fig. 3: ein Schaltschema der Getriebevorrichtung gemäß Fig. 2 in tabellarischer Form; und
- Fig. 4: mehrere Verläufe verschiedener Betriebszustandsparameter des Fahrzeugantriebsstranges gemäß Fig. 1 während der erfindungsgemäßen Synchronisierung eines formschlüssigen Schaltelementes der Getriebevorrichtung.

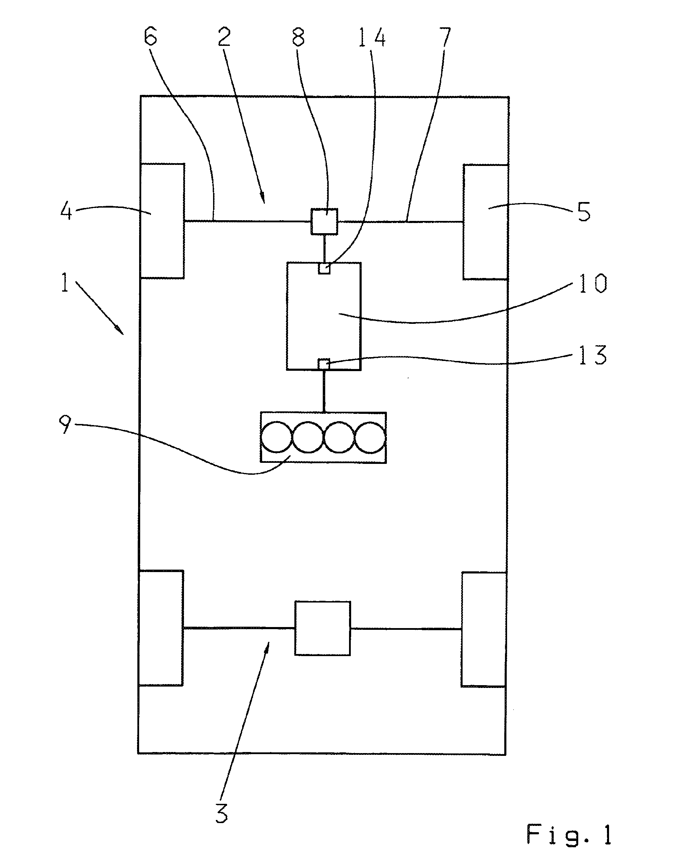

In Fig. 1 ist eine stark schematisierte Darstellung eines Fahrzeugantriebsstranges 1 mit einer ersten Fahrzeugachse 2 und einer zweiten Fahrzeugachse 3 gezeigt, wobei die erste Fahrzeugachse 2 eine Fahrzeugvorderachse und die zweite Fahrzeugachse 3 eine Fahrzeughinterachse darstellt. Die erste Fahrzeugachse 2 umfasst zwei Antriebsräder 4, 5, welche über zwei Antriebswellen 6, 7 mit einer Differentialgetriebeeinheit 8 verbunden sind. Mittels der Differentialgetriebeeinheit 8 wird ein von einer vorliegend als Brennkraftmaschine ausgebildeten Antriebsmaschine 9 erzeugtes Antriebsmoment zu gleichen Teilen auf die beiden Antriebsräder 4 und 5 verteilt. Darüber hinaus ist zwischen der Antriebsmaschine 9 und der Differentialgetriebeeinheit 8 eine Getriebevorrichtung 10 vorgesehen, die vorliegend als Automatgetriebe ausgeführt ist.

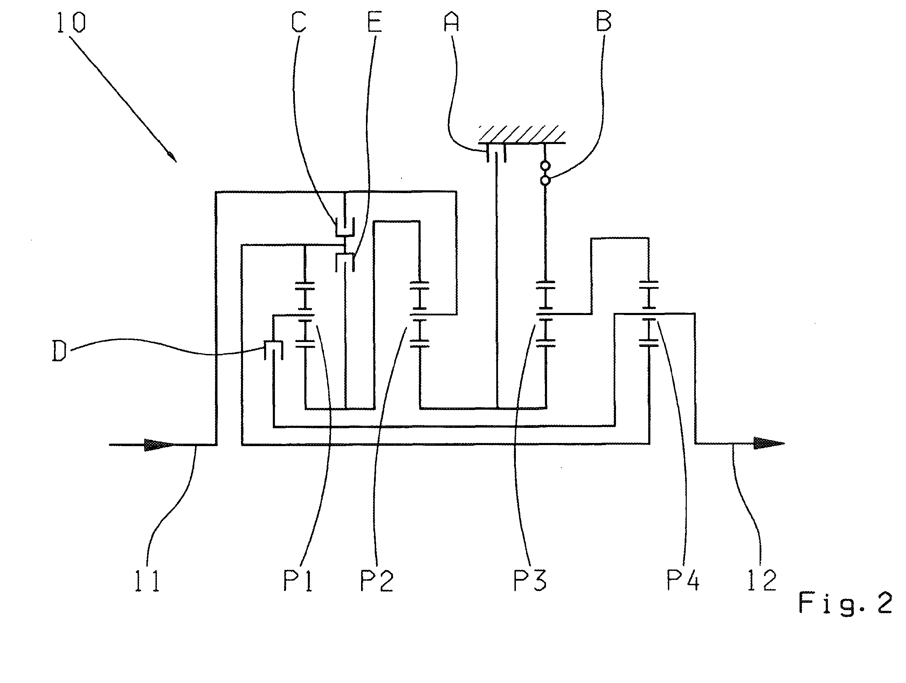

Fig. 2 zeigt ein Räderschema der Getriebevorrichtung 10, welches grundsätzlich aus der DE 10 2005 002 337 A1 bekannt ist. Die Getriebevorrichtung 10 umfasst eine Antriebswelle 11 und eine Abtriebswelle 12, welche mit der Differentialgetriebeeinheit 8 verbunden ist, während die Antriebswelle 11 mit der Antriebsmaschine 9 in Wirkverbindung steht.

Darüber hinaus umfasst die Getriebevorrichtung 10 vier Planetenradsätze P1 bis P4. Zusätzlich umfasst die Getriebevorrichtung 10 fünf Schaltelemente A bis E, wovon die Schaltelemente A und B als Bremsen und die Schaltelemente C bis D als Schaltkupplungen ausgeführt sind.

Mit den Schaltelementen A bis E ist in der in Fig. 2 anhand des Schaltschemas der Getriebevorrichtung 10 näher ersichtlichen Art und Weise ein selektives Schalten von acht Vorwärtsgängen "1" bis "8" und einem Rückwärtsgang "R" realisierbar, wobei zur Darstellung einer Übersetzung in der Getriebevorrichtung 10 bzw. zum Herstellen eines Kraftflusses im Bereich der Getriebevorrichtung 10 jeweils gleichzeitig drei der Schaltelemente A bis E in einen geschlossenen Betriebszustand zu führen bzw. zu halten sind.

Das Schaltelement B ist im Gegensatz zu dem aus der DE 10 2005 002 337 A1 bekannten Mehrgruppengetriebe als formschlüssiges Schaltelement ausgebildet, um im Betrieb der Getriebevorrichtung 10 im Vergleich zu dem aus dem Stand der Technik bekannten Mehrgruppengetriebe, welches nur mit reibschlüssigen Schaltelementen ausgebildet ist, durch geöffnete reibschlüssige Schaltelemente verursachte Schleppmomente zu reduzieren. Die weiteren Schaltelemente A und C bis E sind als reibschlüssige Schaltelemente ausgebildet.

Da formschlüssige Schaltelemente im Allgemeinen nur innerhalb eines sehr schmalen Differenzdrehzahlbandes um die Synchrondrehzahl aus einem geöffneten Betriebszustand in einen geschlossenen Betriebszustand überführbar sind, wird die Synchronisierung des jeweils zuzuschaltenden formschlüssigen Schaltelementes B ohne zusätzliche konstruktive Ausführungen mittels des nachfolgend näher beschriebenen erfindungsgemäßen Verfahrens unterstützt bzw. durch die erfindungsgemäße Vorgehensweise vollständig realisiert. Das formschlüssige Schaltelement B ist vorliegend als Klauenbremse ohne zusätzliche Synchronisierung ausgebildet.

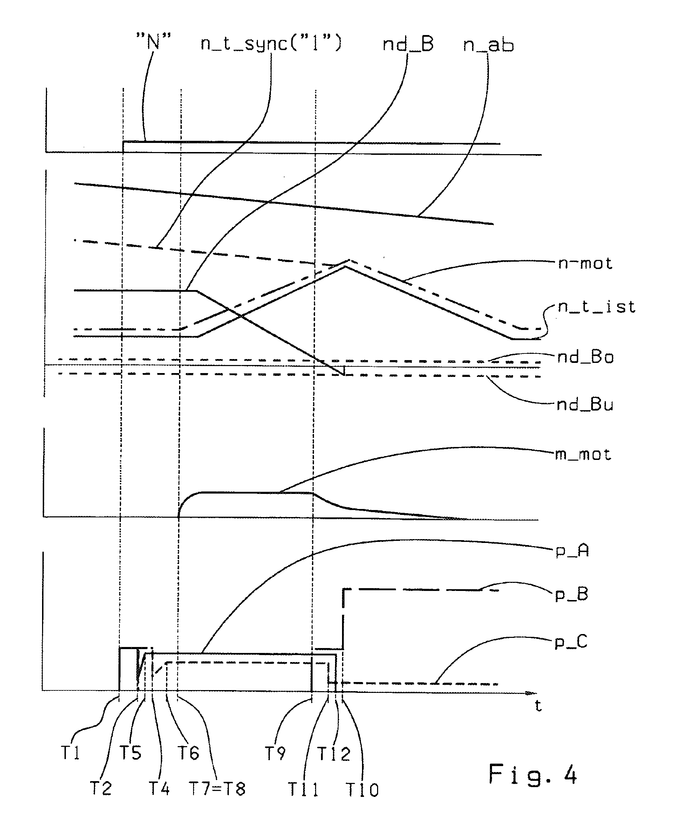

Die Wirkungsweise einer Variante des erfindungsgemäßen Verfahrens wird anhand der in Fig. 4 über der Zeit t näher dargestellten Betriebszustandsverläufe mehrerer Betriebsparameter des Fahrzeugantriebsstranges 1 gemäß Fig. 1 näher erläutert.

Bei dem den Verläufen der Betriebsparameter des Fahrzeugantriebsstranges 1 zugrunde liegenden Betriebszustandsverlauf findet zu einem Zeitpunkt T1 bei rollendem Fahrzeug bzw. bei einer Abtriebsdrehzahl im Bereich der Fahrzeugachse 2 größer Null eine Initialisierung eines Getriebesteuergerätes statt und die Getriebevorrichtung 10 liegt in einem Neutralbetriebszustand vor, zu dem der Kraftfluss im Bereich der Getriebevorrichtung 10 unterbrochen ist.

In Abhängigkeit der zum Zeitpunkt T1 vorliegenden Abtriebsdrehzahl n_ab wird über eine sogenannte Gangnachführungsfunktion ermittelt, dass bei einer fahrerseitigen Anforderung zur Herstellung des Kraftflusses im Bereich der Getriebevorrichtung 10 die erste Übersetzungsstufe "1" für Vorwärtsfahrt im Bereich der Getriebevorrichtung 10 einzulegen ist.

Zum Zeitpunkt T1 ist das formschlüssige Schaltelement B vollständig geöffnet und zur Darstellung der ersten Übersetzungsstufe "1" aus seinem vollständig geöffneten Betriebszustand in seinen vollständig geschlossenen Betriebszustand zu überführen. Aus diesem Grund werden die beiden reibschlüssigen Schaltelemente A und C, die zur Darstellung der ersten Übersetzungsstufe "1" ebenfalls zuzuschalten sind, mit den in Fig. 4 entsprechend dargestellten Verläufen von Betätigungsdrücken p_A und p_C angesteuert. Dabei wird zunächst das Schaltelement A während einer Schnellfüllphase bis zu einem Zeitpunkt T2 mit einem Schnellfüllpuls beaufschlagt. Zu einem Zeitpunkt T3, der zeitlich in etwa dem Zeitpunkt T2 entspricht, wird das reibschlüssige Schaltelement C ebenfalls mit einem Schnellfüllpuls beaufschlagt, der zu einem Zeitpunkt T4 endet.

Ab dem Zeitpunkt T2 wird der Betätigungsdruck p_A des reibschlüssigen Schaltelementes A über eine Druckrampe, die zu einem Zeitpunkt T5 endet, auf ein Zwischendruckniveau angehoben, zu dem das reibschlüssige Schaltelement A in einem schlupffreien Betriebszustand vorliegt. Ab dem Zeitpunkt T3 wird der Betätigungsdruck p_C des reibschlüssigen Schaltelementes C über eine zu einem Zeitpunkt T6 endende Druckrampe auf ein Zwischendruckniveau angehoben, womit das reibschlüssige Schaltelement C ebenfalls in einen schlupffreien Betriebszustand überführt wird. Eine Motordrehzahl n_mot entspricht bis zu einem Zeitpunkt T7, der zeitlich auf den Zeitpunkt T6 folgt, im Wesentlichen der Leerlaufdrehzahl der Antriebsmaschine 9, da im Bereich der Getriebevorrichtung 10 der Neutralbetriebszustand "N" eingelegt ist.

Dadurch, dass die beiden reibschlüssigen Schaltelemente A und C in schlupffreiem Betriebszustand vorliegen, wird in der Getriebevorrichtung 10 eine topologische Zwangskopplung eingestellt, die eine Ermittlung einer Differenzdrehzahl nd_B im Bereich des formschlüssigen Schaltelementes B in Verbindung mit einem getriebeeingangsseitig angeordneten Drehzahlsensor 14 und einem getriebeausgangsseitig angeordneten Drehzahlsensor 13 ermöglicht.

Das Zwischendruckniveau des Betätigungsdruckes p_A und des Betätigungsdruckes p_C der reibschlüssigen Schaltelemente A und C liegt unterhalb des Schließdruckniveaus der reibschlüssigen Schaltelemente A und C, zu welchen jeweils das maximale Drehmoment über die reibschlüssigen Schaltelemente A und C führbar ist.

Wird im Bereich des formschlüssigen Schaltelementes B eine Differenzdrehzahl nd_B ermittelt, die außerhalb eines zulässigen Drehzahlfensters der Differenzdrehzahl nd_B liegt, wird ein Antriebsmoment m_mot der Antriebsmaschine 9 in der nachfolgend näher beschriebenen Art und Weise auf ein die Differenzdrehzahl nd_B des formschlüssigen Schaltelementes B innerhalb des Drehzahlfensters bzw. innerhalb eines durch eine obere Drehzahlgrenze nd_Bo und eine untere Drehzahlgrenze nd_Bu vordefinierten Differenzdrehzahlbereiches führendes Niveau eingestellt, innerhalb dem das formschlüssige Schaltelement B wenigstens annähernd einen Synchronzustand aufweist und in gewünschtem Umfang innerhalb einer definierten Zuschaltzeit schließbar ist.

Während des der Darstellung gemäß Fig. 4 zugrunde liegenden Betriebszustandsverlaufes liegt die Differenzdrehzahl nd_B zu einem Zeitpunkt T8, der im Wesentlichen dem Zeitpunkt T7 entspricht, außerhalb des Differenzdrehzahlbereiches. Gleichzeitig wird eine Synchrondrehzahl n_t_sync("1") einer Getriebeeingangsdrehzahl der Getriebevorrichtung 10 bei eingelegter erster Übersetzungsstufe "1" auf Basis der aktuellen Abtriebsdrehzahl n_ab multipliziert mit der Übersetzung der ersten Übersetzungsstufe "1" bestimmt. In Abhängigkeit einer Abweichung zwischen der aktuellen Getriebeeingangsdrehzahl n_t_ist der Getriebevorrichtung 10 und der berechneten Synchrondrehzahl n_t_sync("1") wird ein positiver Motoreingriff im Bereich der Antriebsmaschine 9 bzw. eine positive Drehmomentanforderung durchgeführt und das Motormoment m_mot ab dem Zeitpunkt T8 angehoben. Alternativ hierzu kann auch eine gewünschte Motordrehzahl n_mot vorgegeben werden.

Die Anhebung des Motormomentes m_mot der Antriebsmaschine 9 bewirkt einen Anstieg der Motordrehzahl n_mot der Antriebsmaschine 9 und somit auch der aktuellen Getriebeeingangsdrehzahl n_t_ist, wobei letztere in Richtung der Synchrondrehzahl n_t_sync("1") der Getriebeeingangsdrehzahl bei eingelegter erster Übersetzungsstufe "1" ansteigt.

Der Anstieg der Ist-Getriebeeingangsdrehzahl n_t_ist der Getriebevorrichtung 10 bewirkt eine Reduzierung der Differenzdrehzahl nd_B im Bereich des formschlüssigen Schaltelementes B, wobei die Differenzdrehzahl nd_B zu einem Zeitpunkt T9 der oberen Differenzdrehzahlgrenze nd_Bo des vordefinierten Differenzdrehzahlbereiches entspricht.

Zum Zeitpunkt T9 wird der Betätigungsdruck p_B des formschlüssigen Schaltelementes B auf ein das formschlüssige Schaltelement B aus seinem vollständig geöffneten Betriebszustand in seinen geschlossenen Betriebszustand überführendes Druckniveau angehoben und bis zu einem Zeitpunkt T10 auf diesem Niveau belassen. Gleichzeitig wird das Motormoment m_mot ab dem Zeitpunkt T9 wieder in Richtung des zum Zeitpunkt T8 vorliegenden Niveaus geführt. Vor dem Zuschaltzeitpunkt T10 des formschlüssigen Schaltelementes B, zu dem der Betätigungsdruck p_B des formschlüssigen Schaltelementes B auf das Schließdruckniveau des formschlüssigen Schaltelementes B angehoben wird, werden die Betätigungsdrücke p_A und p_C der reibschlüssigen Schaltelemente A und C zu zeitlich vor dem Zuschaltzeitpunkt T10 liegenden weiteren Zeitpunkten T11 und T12 auf Druckniveaus abgesenkt, zu welchen über die reibschlüssigen Schaltelemente A und C im Wesentlichen kein Drehmoment führbar ist. Dabei wird der Betätigungsdruck p_A des reibschlüssigen Schaltelementes A zum Zeitpunkt T12 im Wesentlichen auf Null abgesenkt, während der Betätigungsdruck p_C des reibschlüssigen Schaltelementes C zum Zeitpunkt T11 auf das Fülldruckniveau abgesenkt wird, von dem ausgehend eine Erhöhung des Betätigungsdruckes p_C wiederum eine unmittelbare Erhöhung der Übertragungsfähigkeit des reibschlüssigen Schaltelementes C bewirkt.

Mit dem vorbeschriebenen Verfahren, während dem im Bereich der Getriebevorrichtung 10 zeitweise über die teilweise Zuschaltung der reibschlüssigen Schaltelemente A und C eine topologische Zwangskopplung erzeugt wird, ist die Differenzdrehzahl des formschlüssigen Schaltelementes B über die beiden bereits im Bereich der Getriebevorrichtung 10 vorgesehenen Drehzahlsensoren 13 und 14 ohne zusätzlichen Drehzahlsensor im Bereich des formschlüssigen Schaltelementes B auf einfache und kostengünstige Art und Weise bestimmbar. Darüber hinaus ist die Synchronisation des formschlüssigen Schaltelementes B ohne aufwändige Regelung mehrerer Schaltelemente der Getriebevorrichtung 10 über einen rein gesteuerten Ansteuerungsablauf durchführbar. Zusätzlich ist die Getriebevorrichtung 10 als Planetengetriebe ohne zusätzliches Trennelement im Bereich des Getriebeeingangs, wie beispielsweise einen hydrodynamischen Drehmomentwandler oder eine getriebeeingangsseitig angeordnete separate Anfahrkupplung, mit integrierter Anfahrkupplung ausführbar, womit die Getriebevorrichtung 10 bauraum- und kostengünstig herstellbar ist.

Das formschlüssige Schaltelement B der Getriebevorrichtung 10 ist vorteilhafterweise ohne konstruktive Synchronisierungseinrichtungen im Bereich des formschlüssigen Schaltelementes B innerhalb vordefinierter Schaltzeiten mit hohem Komfort synchronisierbar und in seinen geschlossen Betriebszustand überführbar, womit die Getriebevorrichtung 10 mit geringen Fertigungskosten und niedrigem Bauraumbedarf herstellbar ist.

Generell ist das erfindungsgemäße Verfahren während eines Neutralbetriebszustandes der Getriebevorrichtung 10 bei beliebiger Fahrzeuggeschwindigkeit bzw. bei beliebiger Abtriebsdrehzahl während verschiedener Betriebszustände des Fahrzeugantriebsstranges 1 durchführbar, wenn das formschlüssige Schaltelement B in Abhängigkeit der jeweils aktuellen Abtriebsdrehzahl aus seinem vollständig geöffneten Betriebszustand in seinen vollständig geschlossenen Betriebszustand zu überführen ist, um die Getriebevorrichtung 10 betriebszustandsabhängig für eine Herstellung des Kraftflusses im Bereich der Getriebevorrichtung 10 anforderungsgemäß vorzubereiten.

Das bedeutet, dass das erfindungsgemäße Verfahren auf Basis des in Fig. 2 dargestellten Radsatzschemas der Getriebevorrichtung 10 auch bei einer zu erwartenden Darstellung der zweiten Übersetzungsstufe "2", der dritten Übersetzungsstufe "3", der vierten Übersetzungsstufe "4", der fünften Übersetzungsstufe "5" oder der Übersetzung für Rückwärtsfahrt "R" ausgehend vom Neutralbetriebszustand der Getriebevorrichtung 10 durchgeführt wird.

### Bezugszeichen

- 1: Fahrzeugantriebsstrang
- 2, 3: Fahrzeugachse
- 4, 5: Antriebsrad
- 6, 7: Antriebswelle
- 8: Differentialgetriebeeinheit
- 9: Antriebsmaschine
- 10: Getriebevorrichtung
- 11: Antriebswelle
- 12: Abtriebswelle
- 13, 14: Drehzahlsensor
- A bis E: Schaltelemente
- m_mot: Antriebsmoment der Antriebsmaschine
- "N": Neutralbetriebszustand der Getriebevorrichtung
- n_ab: Abtriebsdrehzahl
- n_mot: Motordrehzahl
- n_t_ist: Ist-Getriebeeingangsdrehzahl
- n_t_sync("1"): Synchrondrehzahl der Getriebeeingangsdrehzahl der ersten Übersetzungsstufe
- nd_B: Differenzdrehzahl des formschlüssigen Schaltelementes B
- nd_Bo: obere Differenzdrehzahlgrenze
- nd_Bu: untere Differenzdrehzahlgrenze
- P1 bis P4: Planetenradsätze
- p_A: Betätigungsdruck des reibschlüssigen Schaltelementes A
- p_B: Betätigungsdruck des formschlüssigen Schaltelementes B
- p_C: Betätigungsdruck des reibschlüssigen Schaltelementes C
- t: Zeit
- T1 bis T12: diskreter Zeitpunkt
- "1" bis "R": Übersetzung

## Patentansprüche

1. Verfahren zum Betreiben einer Getriebevorrichtung (10) eines Fahrzeugantriebsstranges (1) mit mehreren reibschlüssigen Schaltelementen (A, C bis E) und wenigstens einem formschlüssigen Schaltelement (B) zum Darstellen verschiedener Übersetzungen ("1" bis "R"), **dadurch gekennzeichnet, dass** in einem Neutralbetriebszustand ("N") der Getriebevorrichtung (10), zu dem der Kraftfluss im Bereich der Getriebevorrichtung (10) unterbrochen ist, und bei Vorliegen eines Betriebszustandsverlaufes des Fahrzeugantriebsstranges (1), zu dem bei einer Anforderung zum Herstellen des Kraftflusses in der Getriebevorrichtung (10) das wenigstens eine formschlüssige Schaltelement (B) aus einem geöffneten in einen geschlossenen Betriebszustand zu überführen ist, die Übertragungsfähigkeiten von wenigstens zwei zur Herstellung des Kraftflusses zuzuschaltenden reibschlüssigen Schaltelementen (A, C) auf ein Niveau angehoben werden, auf dem die Schaltelemente (A, C) sich in einem schlupffreien Betriebszustand befinden, wodurch eine Differenzdrehzahl (nd_B) im Bereich des formschlüssigen Schaltelementes (B) ermittelt wird, wobei ein Antriebsmoment (m_mot) einer Antriebsmaschine (9) auf ein Niveau eingestellt wird, welches bewirkt, dass die Differenzdrehzahl (nd_B) im Bereich des formschlüssigen Schaltelementes (B) innerhalb eines vordefinierten Differenzdrehzahlbereiches (nd_Bo, nd_Bu) geführt wird, wobei innerhalb des vordefinierten Differenzdrehzahlbereiches (nd_Bo, nd_Bu) das formschlüssige Schaltelement (B) wenigstens annähernd einen Synchronzustand aufweist und schließbar ist.

2. Verfahren nach Anspruch 1, **dadurch gekennzeichnet, dass** die Übertragungsfähigkeiten der beiden reibschlüssigen Schaltelemente (A, C) vor dem Zuschalten des formschlüssigen Schaltelementes (B) im Wesentlichen auf Null abgesenkt werden.

3. Verfahren nach Anspruch 2, **dadurch gekennzeichnet, dass** eines der beiden reibschlüssigen Schaltelemente (C) zum Zuschaltzeitpunkt (T10) des formschlüssigen Schaltelementes (B) und nach der Zuschaltung des formschlüssigen Schaltelementes (B) mit einer Betätigungskraft beaufschlagt wird, wobei eine Erhöhung der Betätigungskraft eine unmittelbare Erhöhung der Übertragungsfähigkeit des reibschlüssigen Schaltelementes (C) bewirkt.

4. Verfahren nach Anspruch 3, **dadurch gekennzeichnet, dass** das Antriebsmoment (m_mot) der Antriebsmaschine (9) ab dem Zuschaltzeitpunkt (T10) des formschlüssigen Schaltelementes (B) auf ein betriebszustandsabhängig angefordertes Niveau geführt wird.

5. Verfahren nach Anspruch 4, **dadurch gekennzeichnet, dass** das betriebszustandsabhängige Niveau des Antriebsmomentes (m_mot) zu einer Leerlaufdrehzahl der Drehzahl (n_mot) der Antriebsmaschine (9) äquivalent ist.

6. Verfahren nach einem der Ansprüche 1 bis 5, **dadurch gekennzeichnet, dass** zwei Drehzahlsensoren (13, 14) zur Ermittlung der Differenzdrehzahl (nd_B) im Bereich des formschlüssigen Schaltelementes (B) vorgesehen sind, wobei einer der Drehzahlsensoren (13) getriebeeingangsseitig und der andere Drehzahlsensor (14) getriebeausgangsseitig angeordnet ist.

## Claims

1. Method for operating a transmission device (10) of a vehicle drive train (1) having a plurality of frictionally locking shift elements (A, C to E) and at least one positively locking shift element (B) for forming various transmission ratios ("1" to "R") **characterized in that** in a neutral operating state ("N") of the transmission device (10) in which the force flux in the region of the transmission device (10) is interrupted and when an operating state profile of the vehicle drive train (1) is present in which, given a request to bring about the force flux in the transmission device (10), the at least one positively locking shift element (B) is to be moved out of an opened operating state into a closed operating state, the transmission capabilities of at least two frictionally locking shift elements (A, C) which are to be engaged in order to bring about the force flux are raised to a level at which the shift elements (A, C) are in a slip-free operating state, as a result of which a differential rotational speed (nd_B) is determined in the region of the positively locking shift element (B), wherein a drive torque (m_mot) of a drive machine (9) is set to a level which causes the differential rotational speed (nd_B) in the region of the positively locking shift element (B) to be adjusted within a predefined differential rotational speed range (nd_Bo, nd_Bu), wherein within the predefined differential rotational speed range (nd_Bo, nd_Bu) the positively locking shift element (B) has at least approximately a synchronous state and can be closed.

2. Method according to Claim 1, **characterized in that** the transmission capabilities of the two frictionally locking shift elements (A, C) are reduced essentially to zero before the engagement of the positively locking shift element (B).

3. Method according to Claim 2, **characterized in that** an activation force is applied to one of the two frictionally locking shift elements (C) at the engagement point (T10) of the positively locking shift element (B) and after the engagement of the positively locking shift element (B), wherein an increase in the activation force brings about a direct increase in the transmission capability of the frictionally locking shift element (C).

4. Method according to Claim 3, **characterized in that** the drive torque (m_mot) of the drive machine (9) is adjusted to a level which is requested as a function of the operating state, starting from the engagement point (T10) of the positively locking shift element (B).

5. Method according to Claim 4, **characterized in that** the operating-state-dependent level of the drive torque (m-mot) is equivalent to an idling rotational speed of the rotational speed (n_mot) of the drive machine (9).

6. Method according to one of Claims 1 to 5, **characterized in that** two rotational speed sensors (13, 14) are provided for determining the differential rotational speed (nd_B) in the region of the positively locking shift element (B), wherein one of the rotational speed sensors (13) is arranged on the transmission input side and the other rotational speed sensor (14) is arranged on the transmission output side.

## Revendications

1. Procédé pour faire fonctionner un dispositif de transmission (10) d'une chaîne cinématique d'un véhicule (1) comprenant plusieurs éléments de changement de vitesses à engagement par friction (A, C à E) et au moins un élément de changement de vitesses à engagement positif (B) pour réaliser différents rapports de transmission ("1" à "R"), **caractérisé en ce que**, dans un état de fonctionnement neutre ("N") du dispositif de transmission (10), auquel le flux de forces dans la région du dispositif de transmission (10) est interrompu, et en présence d'une allure de l'état de fonctionnement de la chaîne cinématique d'un véhicule (1) à laquelle l'au moins un élément de changement de vitesses à engagement positif (B) doit être transféré d'un état de fonctionnement ouvert dans un état de fonctionnement fermé en cas d'une exigence d'établissement du flux de forces dans le dispositif de transmission (10), les capacités de transfert d'au moins deux éléments de changement de vitesses (A, C) à engagement par friction devant être enclenchés pour établir le flux de forces sont augmentées à un niveau auquel les éléments de changement de vitesses (A, C) se trouvent dans un état de fonctionnement sans glissement, de sorte qu'un régime différentiel (nd_B) dans la région de l'élément de changement de vitesses par engagement positif (B) soit détecté, un couple d'entraînement (m_mot) d'un moteur d'entraînement (9) étant ajusté à un niveau tel que le régime différentiel (nd_B) dans la région de l'élément de changement de vitesses par engagement positif (B) soit conduit à l'intérieur d'une plage de régime différentiel prédéfinie (nd_Bo, nd_Bu), l'élément de changement de vitesses par engagement positif (B) présentant au moins approximativement un état synchrone et pouvant être fermé à l'intérieur de la plage de régime différentiel prédéfinie (nd_Bo, nd_Bu).

2. Procédé selon la revendication 1, **caractérisé en ce que** les capacités de transfert des deux éléments de changement de vitesses à engagement par friction (A, C) sont abaissées essentiellement à zéro avant l'enclenchement de l'élément de changement de vitesses à engagement positif (B).

3. Procédé selon la revendication 2, **caractérisé en ce que** l'un des deux éléments de changement de vitesses à engagement par friction (C) est sollicité par une force d'actionnement à l'instant d'enclenchement (T10) de l'élément de changement de vitesses à engagement positif (B) et après l'enclenchement de l'élément de changement de vitesses à engagement positif (B), une augmentation de la force d'actionnement provoquant une augmentation immédiate de la capacité de transfert de l'élément de changement de vitesses à engagement par friction (C).

4. Procédé selon la revendication 3, **caractérisé en ce que** le couple d'entraînement (m_mot) du moteur d'entraînement (9) est amené à partir de l'instant d'enclenchement (T10) de l'élément de changement de vitesses à engagement positif (B) à un niveau exigé dépendant de l'état de fonctionnement.

5. Procédé selon la revendication 4, **caractérisé en ce que** le niveau dépendant de l'état de fonctionnement du couple d'entraînement (m_mot) est équivalent à un régime de marche à vide du régime (n_mot) du moteur d'entraînement (9).

6. Procédé selon l'une quelconque des revendications 1 à 5, **caractérisé en ce que** deux capteurs de régime (13, 14) sont prévus pour déterminer le régime différentiel (nd_B) dans la région de l'élément de changement de vitesses à engagement positif (B), l'un des capteurs de régime (13) étant disposé du côté de l'entrée de la transmission et l'autre capteur de régime (14) étant disposé du côté de la sortie de la transmission.
